(19) Europäisches Patentamt

European Patent Office

Office européen des brevets

(11) Numéro de publication : **0 486 367 B1**

(12) # FASCICULE DE BREVET EUROPEEN

(45) Date de publication du fascicule du brevet :
**22.03.95 Bulletin 95/12**

(51) Int. Cl.⁶ : **G01S 13/82,** G06K 19/06

(21) Numéro de dépôt : **91402991.3**

(22) Date de dépôt : **07.11.91**

(54) **Modem pour badge hyperfréquence, à amplificateur à réflexion.**

(30) Priorité : **16.11.90 FR 9014292**

(43) Date de publication de la demande :
**20.05.92 Bulletin 92/21**

(45) Mention de la délivrance du brevet :
**22.03.95 Bulletin 95/12**

(84) Etats contractants désignés :
**AT BE CH DE ES GB GR IT LI LU NL SE**

(56) Documents cités :
**EP-A- 0 023 275
WO-A-89/11701
FR-A- 2 624 677
US-A- 4 591 803
US-A- 4 650 981**

(73) Titulaire : **THOMSON-CSF
SEMICONDUCTEURS SPECIFIQUES
51 Esplanade du Général de Gaulle
F-92800 Puteaux (FR)**

(72) Inventeur : **Camiade, Marc
THOMSON-CSF,
SCPI,
Cédex 67
F-92045 Paris la Défense (FR)**
Inventeur : **Quentin, Pierre
THOMSON-CSF,
SCPI,
Cédex 67
F-92045 Paris la Défense (FR)**
Inventeur : **Savary, Pierre
THOMSON-CSF,
SCPI,
Cédex 67
F-92045 Paris la Défense (FR)**
Inventeur : **Brandeau, Jean-Philippe
THOMSON-CSF,
SCPI,
Cédex 67
F-92045 Paris la Défense (FR)**

(74) Mandataire : **Taboureau, James et al
THOMSON-CSF,
SCPI,
B.P. 329,
50, rue Jean-Pierre Timbaud
F-92402 Courbevoie Cédex (FR)**

## Description

La présente invention concerne un système de transmission de données par modulation-démodulation d'onde hyperfréquence, pour communication bidirectionnelle entre une station fixe, dite balise ou lecteur, et une station mobile, dite badge ou répondeur. Plus précisément, l'invention concerne les circuits actifs du modem - modulateur-démodulateur - du badge hyperfréquence. En vue de pouvoir émettre, ou plus exactement répondre à une interrogation envoyée par la station fixe, le badge comporte un circuit dans lequel il y a au moins un amplificateur à réflexion. Selon les polarisations appliquées, l'élément actif, un transistor à effet de champ, se comporte soit en détecteur pour la réception, soit en amplificateur à réflexion pour l'émission.

Ce type d'échange de données trouve ses applications dans le contrôle de mobiles, tel qu'identification de wagons sur une voie, d'automobiles à un péage ou de piétons à une entrée d'immeuble. La station mobile ou badge se présente comme une carte à puce, et elle doit être extrêmement économe en énergie, car elle est alimentée par de petites piles dites "boutons".

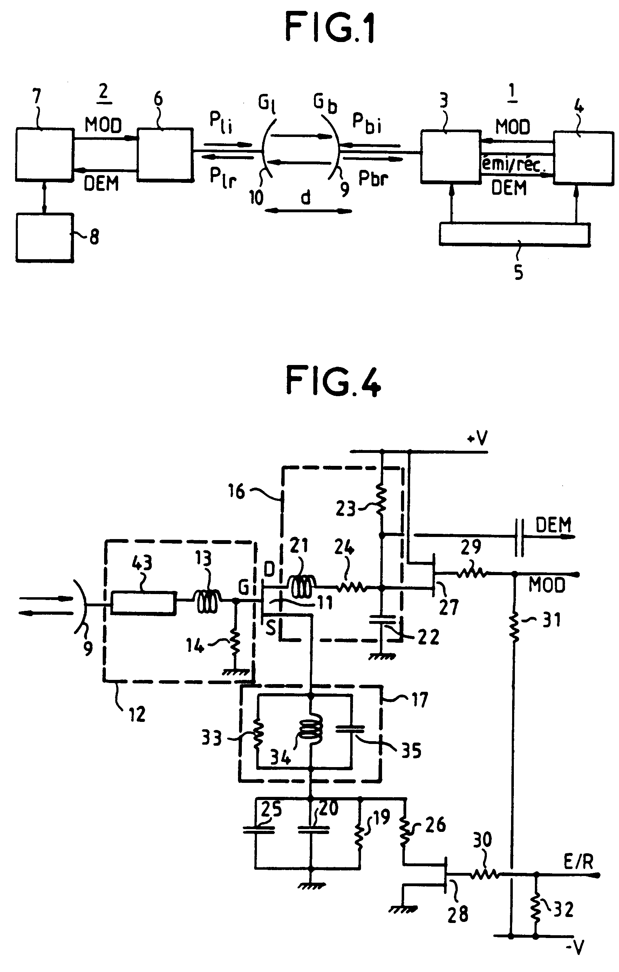

Le schéma d'ensemble d'un système d'échange de données par hyperfréquence, selon l'art connu, est assez simple, et la figure 1 qui le représente permet d'en préciser les éléments, et les sigles utilisés.

Une station mobile ou badge 1 comprend une partie hyperfréquence 3, une partie traitement de l'information 4 et une alimentation 5. Les échanges entre ces deux parties concernent la modulation-démodulation et les commandes émission-réception.

La station fixe ou balise 2 comprend une source hyperfréquence, une partie hyperfréquence 6, une partie de traitement de l'information 7, et un calculateur 8 qui permet de gérer l'ensemble des échanges radioélectriques effectués avec les badges, par l'intermédiaire des antennes 9 pour chaque badge et 10 pour la balise ou lecteur.

On utilisera :
- d = distance entre les antennes 9 et 10
- $G_l$ = gain de l'antenne 10 du lecteur 2
- $G_b$ = gain de l'antenne 9 du badge 1
- $P_{li}$ = puissance émise à l'antenne du lecteur 2
- $P_{lr}$ = puissance reçue par l'antenne du lecteur
- $P_{bi}$ = puissance émise à l'antenne du badge 1
- $P_{br}$ = puissance reçue par l'antenne du badge

Les modulations utilisées dans ces systèmes sont généralement de type OOK (On-Off Keying) en modulation d'amplitude, de type PSK (Phase Shift Keying) en modulation de phase 0/¶ , ou de type FSK (Frequency Shift Keying).

Le fonctionnement du modem n'est pas le même selon que la balise interroge le badge, ou que le badge répond à la balise.

Dans le sens de l'interrogation du badge 1 par le lecteur 2, celui-ci génère ($P_{li}$) un signal hyperfréquence modulé. Le badge reçoit ce signal ($P_{br}$) et le démodule : c'est une étape qui permet d'activer le badge qui était à l'état de veille.

Dans le sens de la réponse du badge 1 au lecteur 2, le lecteur génère alors un signal hyperfréquence non modulé. Le badge reçoit ce signal, le module - c'est à dire le charge des informations au sujet desquelles il a été interrogé - et réémet un signal comportant suivant le cas, soit des pertes, soit du gain.

Les circuits électriques utilisés pour réaliser la fonction hyperfréquence (modem) du badge peuvent être de différents types.

Les circuits actifs comportent la particularité de fournir de la puissance aux fréquences microondes de la porteuse - de l'ordre de 1 à 100 GHz -, ils ont donc du gain à ces fréquences, et utilisent un transistor polarisé. Ces circuits sont généralement utilisés lors de la réémission d'un signal du badge vers le lecteur.

Les circuits semi-actifs ne fournissent aucune puissance aux fréquences microondes de la porteuse, pour lesquelles ils n'ont pas de gain, mais ont cependant du gain aux fréquences de démodulation, de l'ordre de 40 kHz à 1 MHz, ou plusieurs MHz, mais pas en GHz. Ces circuits sont intéressants pour augmenter la sensiblité de détection du badge.

Il existe également des circuits passifs, utilisant des diodes, commutateurs etc..., qui ne présentent aucun gain ni aux fréquences microondes de la porteuse (> 1 GHz) ni aux fréquences de démodulation (<1 GHz). Ces circuits ont une sensiblité faible pour commander le circuit 4 de traitement de l'information, tout au moins dans le cas d'un badge portatif, puisqu'il y a un problème d'énergie fournie par de petites piles "boutons" : ces circuits sont donc moins performants pour la détection.

Il a été dit que le badge ne dispose que de sources d'énergie faibles, et qu'il convient d'économiser par une consommation limitée. C'est pourquoi la solution la plus intéressante, pour la communication dans le sens du badge vers la balise, consiste à moduler l'écho d'une onde porteuse monotone émise par la balise. C'est la balise qui fournit toute l'énergie du faisceau hyperfréquence, et le badge n'a à fournir qu'une faible énergie, limitée aux changements d'états de ses circuits, qui font que l'antenne est ou n'est pas adaptée en impédance à la fréquence de la porteuse - entre 1 et 10 GHz -. En d'autres termes, le badge module l'écho qu'il renvoie vers la balise, ou lecteur.

Les antennes fonctionnant par modulation de leur coefficient de réflexion sont connues. A titre d'exemple , le document FR-A-2 624 677 décrit comment, dans un système de liaison hertzienne bidirectionnelle, l'antenne de l'une des parties du système est désaccordée par déplacement du plan de court-circuit équivalent de réflexion dans le guide d'onde, en ligne à ruban, qui réunit l'antenne à des moyens oscillateurs.

L'invention consiste à modifier le circuit classique d'un modem, comportant au moins un élément actif qui est un transistor hyperfréquence, pour que ce transistor fonctionne en détecteur pour un premier état de polarisations - il est donc en période de veille, et démodule les signaux émis par la balise - puis qu'il fonctionne en amplificateur à réflexion pour un deuxième état de polarisations - il est donc en période "réveil" ou réponse, et module l'écho de la porteuse monotone émise par la balise -.

Selon la façon dont est utilisé l'amplificateur microonde à réflexion, on peut faire de la modulation d'amplitude (OOK) de la modulation en phase (PSK) ou de la modulation de fréquence (FSK).

Un amplificateur microonde à réflexion est un amplificateur qui présente une résistance négative, obtenue en plaçant une contre-réaction entre l'entrée et la sortie du transistor : il présente donc du gain en réflexion, avec un module de rapport vectoriel $|\vec{\Gamma}|$ >1, c'est à dire que

$$\frac{P_{br}}{P_{bi}} > 1$$

De façon plus précise, l'invention concerne un badge hyperfréquence, dans un système d'échange de données par ondes électromagnétiques entre, d'une part, l'antenne d'une station fixe dite balise, et d'autre part l'antenne d'au moins une station mobile dite badge, ce badge comportant un modulateur démodulateur dont l'amplificateur à réflexion est défini par la revendication 1.

L'invention sera mieux comprise par la description plus détaillée qui suit de son organisation générale et de quelques cas d'applications, en s'appuyant sur les figures jointes en annexe, qui représentent :

- figure 1 : schéma synoptique d'ensemble d'échange de données par liaisons microondes. Cette figure, exposée dans le préambule pour l'art connu, reste valable pour l'invention.
- figure 2 : courbe $I_{ds} = f(V_{gs})$ du transistor utilisé dans le badge selon l'invention,
- figure 3 : schéma électrique synoptique du badge selon l'invention,
- figure 4 : schéma de réalisation d'un modem à modulation d'amplitude par la tension de drain, selon l'invention,
- figure 5 : schéma de réalisation d'un modem à modulation d'amplitude par la tension de grille, selon l'invention,
- figure 6 : schéma de réalisation d'un modem à modulation de phase selon l'invention.

Les systèmes d'échange de données par microondes regroupent au moins une station fixe et un grand nombre de stations mobiles : afin de simplifier les explications et les figures, on ne considérera qu'une seule station mobile ou badge 1, et, dans celui-ci, on ne représentera que le modem 3 qui fait l'objet de l'invention. Les circuits 4 de traitement de l'information, qui regroupent un microprocesseur, un circuit logique et un circuit linéaire, sont en dehors du champ de l'invention.

Le modem possède différents états selon la façon dont sont polarisés ses composants actifs, c'est à dire au moins le transistor hyperfréquence et les transistors qui commutent les tensions de polarisations sur les source, grille et drain du transistor hyperfréquence.

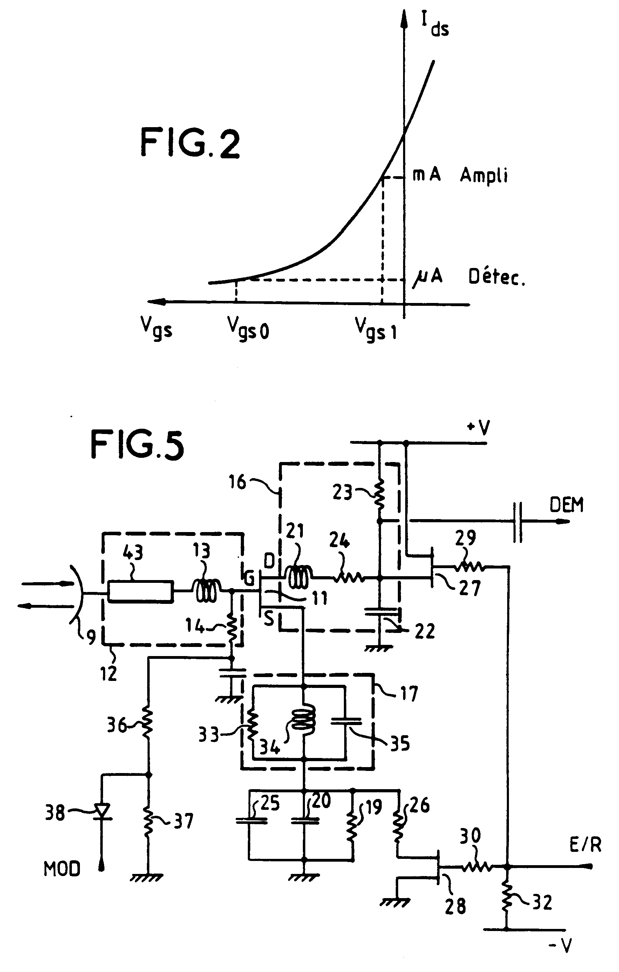

La figure 2 rappelle la courbe, en soi connue, de courant drain $I_{ds}$ en fonction de la tension de polarisation de grille $V_{gs}$ pour un transistor à effet de champ. Lorsque la tension $V_{gs}$ est à $V_{gs0}$, c'est à dire au milieu des caractéristiques du transistor, le courant $I_{ds}$ est de quelques (2-10) microampères, et le transistor fonctionne en détecteur. Lorsque la polarisation de grille $V_{gs}$ est à $V_{gs1}$, moins négative, le transistor fonctionne en amplificateur, avec un courant de drain de quelques milliampères. Toutefois, l'impédance de l'antenne 9 du badge doit être supérieure à l'impédance d'entrée du transistor, en valeur absolue. Sinon à $V_{gs1}$, le transistor fonctionnerait en oscillateur.

En fonction démodulation, c'est à dire à l'état de veille, lorsque le modem 3 du badge 1 reçoit une interrogation de la balise 2, le transistor hyperfréquence est polarisé à $V_{gs0}$ : le badge démodule la microonde modulée émise par la balise en utilisant un circuit actif ou passif, conformément à l'art connu.

Par contre, en fonction modulation, c'est à dire à l'état de réveil, lorsque le modem 3 module l'écho qu'il renvoie à la balise, l'amplificateur microonde à réflexion introduit par l'invention intervient de différentes façons selon que l'on veut faire une modulation d'amplitude, de phase ou de fréquence, mais dans tous les cas le modem se comporte en circuit actif.

En modulation d'amplitude (OOK), il y a deux états logiques, que l'on conviendra d'appeler "état bas" et "état haut", ce qui est plus simple que "premier état logique" et "second état logique". Il est bien entendu que cette convention ne limite pas la portée de l'invention.

A l'état bas, l'amplificateur à réflexion n'intervient pas, l'antenne 9 est adaptée en impédance R, et aucune puissance n'est réfléchie par l'antenne. Le rapport vectoriel est

$$|\vec{\Gamma}| = \frac{P_{br}}{P_{bi}} = 0$$

A l'état haut, l'amplificateur à réflexion intervient : l'antenne 9, connectée sur un amplificateur à réflexion qui a du gain, réfléchit une puissance supérieure à la puissance reçue : $|\vec{\Gamma}|$ >1, et son impédance $R^-$ est négative, donc désadaptée, mais avec du gain en réflexion.

En modulation de phase, l'amplificateur à réflexion est connecté dans les deux états logiques. Mais un modulateur de phase, placé entre l'antenne et l'amplificateur permet d'avoir deux états de phase avec une puissance réfléchie par l'antenne supérieure à la puissance reçue, donc le module $|\vec{\Gamma}| > 1$. Un premier état logique, bas par exemple, correspond à un angle de phase $\varphi_1 = 0$, et la phase du rapport vectoriel est $\angle{\vec{\Gamma}} = 2\varphi_1$ (2 parce qu'il y a un écho, aller et retour). Un second état logique, haut par exemple, correspond à un angle de phase $\varphi_2 \neq \varphi_1$ et la phase du rapport vectoriel est $\angle{\vec{\Gamma}} = 2\varphi_2$.

En modulation de fréquence l'amplificateur à réflexion est également connecté pour les deux états logiques, chacun de ces états correspondant à une variation linéaire de la phase dans le temps.

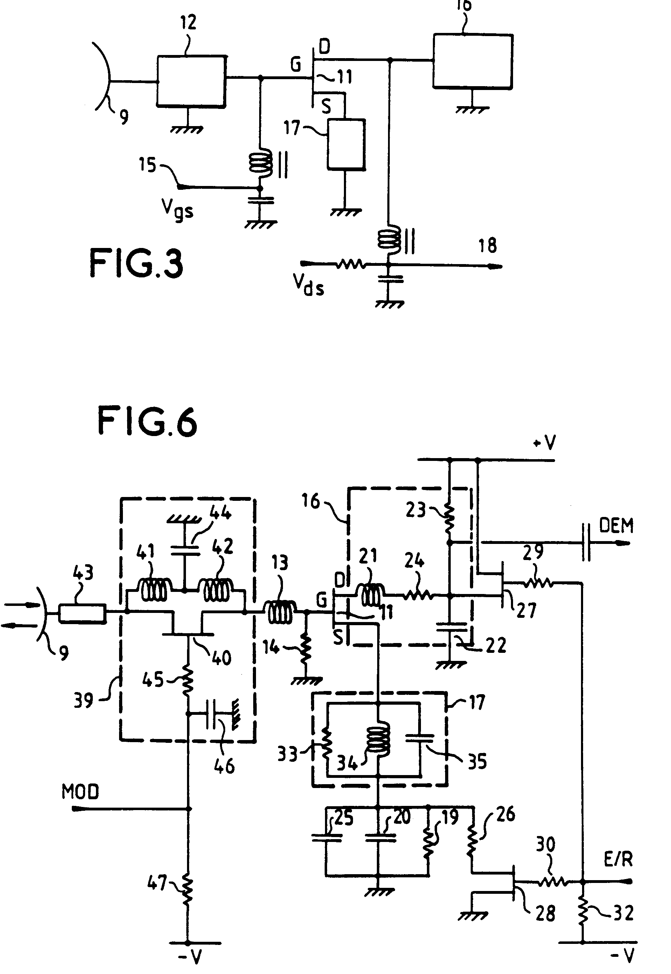

La figure 3 représente le schéma synoptique du modem de badge selon l'invention. Cette figure est très générale, et sera détaillée dans les figures suivantes.

Le modem 3 d'un badge hyperfréquence comprend au moins un transistor à effet de champ 11, capable de travailler dans une gamme de 1 à 100 GHz. Sa grille est connectée à l'antenne 9 à travers un réseau d'adaptation d'impédance 12, qui peut prendre différentes formes comme on le verra dans les exemples détaillés. Elle est polarisée à travers un filtre par une tension de polarisation $V_{gs}$ appliquée sur une entrée 15.

Le drain est chargé par une charge 16 et polarisé à travers un filtre par une tension de polarisation $V_{ds}$ appliquée sur une résistance de charge : la sortie démodulée 18 du modem est prise sur le drain de ce transistor 11.

En réception, l'impédance de source est prise en compte mais ne joue aucun rôle. Polarisé à $V_{gs0}$ près de sa tension de pincement $V_p$, il consomme très faiblement, quelques microampères, et c'est l'état quasi permanent du badge. C'est un circuit actif en détection, et la sensibilité que l'on peut obtenir est de l'ordre de 60 mV pour une puissance incidente de - 30 dBm à 10 GHz.

En émission, le transistor est polarisé à $V_{gs1}$ et consomme quelques milliampères. Pour que ce soit un amplificateur à réflexion, il est nécessaire de placer une contre-réaction entre l'entrée et la sortie du transistor, de façon à générer une résistance négative. Pour un transistor à effet de champ, cette contre-réaction peut être une impédance 17 entre la source et la masse. Cette impédance n'intervient pas en réception - ou plus exactement le calcul de l'impédance 12 de grille tient compte de l'existence de l'impédance 17 de source - mais elle intervient à l'émission, pour transformer le transistor démodulateur 11 en amplificateur à réflexion à résistance négative.

Ce schéma général est détaillé sur les figures 4, 5 et 6 de circuits intégrés monolithiques qui ont toutes des éléments communs. Un modem de badge comporte au moins un transistor 11 à effet de champ avec ses différents circuits.

Sur la grille, un circuit 12 d'adaptation d'impédance formé par une microbande 43 d'adaptation de l'antenne 9 au circuit intégré, une self 13 et une résistance 14 mise à la masse.

Sur le drain, une charge 16 constituée par une self 21, une résistance de drain 24, une résistance de charge 23, de l'ordre de 100 k$\Omega$, et une capacité 22 de découplage aux hyperfréquences.

Sur la source, un circuit de contre-réaction 17 formé par une résistance 33, une self 34 et une capacité 35 : ce circuit 17 est découplé à la masse par une capacité 25 de découplage aux hyperfréquences et 20 aux fréquences de démodulation. La résistance 19, de l'ordre de 500 k$\Omega$, constitue un circuit d'autopolarisation grille-source.

Le modem est alimenté entre deux tensions +V et -V (différente de la masse) et sa sortie démodulée DEM est prise sous la résistance de charge 23 du drain, et découplée par une capacité.

Les composants du circuit 12 d'adaptation d'impédance de grille sont un compromis entre les valeurs qu'ils devraient avoir dans les trois états du transistor 11, et ils tiennent compte de la contre-réaction 17 de la source.

La figure 4 donne l'exemple d'un modem actif à modulation d'amplitude par la tension de drain du transistor 11.

En plus des composants qui viennent d'être décrits, communs aux trois figures 4, 5, 6 elle comporte :

- un transistor 27, commandé par le signal de modulation MOD , provenant du circuit 4 de traitement de l'information, à travers une résistance de charge 23 du transistor 11. S'il n'y a aucun signal de modulation, la résistance 31 met la grille du transistor 27 à -V et la bloque.
- un transistor 28, commandé par le signal d'émission -réception E/R à travers une résistance 30 de limitation de courant. Le transistor 28, lorsqu'il est passant, met une résistance 26 de faible valeur - environ 1k$\Omega$ - en parallèle avec la résistance 19 d'autopolarisation qui fait environ 500 k$\Omega$. S'il n'y a aucun signal d'émission-réception E/R la résistance 32 met la grille du transistor 28 à -V et le bloque.

Le modem fonctionne de la façon suivante.

A l'état de veille, les entrées modulation MOD et émission/réception E/R sont à -V ou sous haute impédance, et le transistor 11 est polarisé à $V_{gs0}$ et $V_{ds0}$ : le transistor fonctionne en détecteur, prêt à démoduler une onde hyperfréquence modulée émise par la balise 2.

Lorsque le modem est réveillé par la balise, l'entrée E/R est à +V et le transistor 11 est polarisé à $V_{gs1}$ et $V_{ds0}$. La résistance 19 (500k) "court-circuitée" par la résistance 26 (1k) fait que la contre-réaction 17 va intervenir et que le transistor 11 se comportera en amplificateur à condition d'être alimenté. Deux cas se présentent selon la polarité du signal de modulation :

- si MOD = +V, le transistor 27 court-circuite la résistance 23, le drain du transistor 11 est à + V et il se comporte en mode amplificateur à réflexion : $|\overrightarrow{\Gamma}| > 1$.
- si MOD = -V, le transistor 11 n'est plus alimenté sur son drain, les polarisations $V_{gs}$ et $V_{ds}$ tombent aux environs de zéro et le transistor 11 se comporte en atténuateur : $|\overrightarrow{\Gamma}| = 0$. On a donc modulé par la tension de drain, mais le transistor 11 présente trois états : détecteur, amplificateur, atténuateur.

La figure 5 représente un modem actif à modulation d'amplitude par la tension de grille du transistor 11.

Par comparaison avec la figure 4, on voit que les transistors de commutation 27 et 28, et leurs résistances associées, sont montés de la la même façon, à l'exception près que l'entrée émission-réception E/R commande les deux transistors de commutation 27 et 28 simultanément. Une conséquence en est qu'une seule résistance de rappel 32 suffit pour les deux transistors.

Par contre, l'entrée de modulation MOD est reportée sur la grille du transistor 11. Le signal de modulation MOD, à travers l'atténuateur 36+37 et la diode 38, est appliqué sur la résistance de grille 14.

A l'état de veille, le fonctionnement du modem est exactement le même que dans le cas précédent. Lorsqu'il est réveillé par la balise, le badge émet un signal E/R positif, qui rend passants les deux transistors commutateurs 27 et 28. La modulation est obtenue ainsi :

- si MOD = + V, la diode 38 bloque ce signal positif, et le transistor 11 est polarisé à $V_{gs1}$ et $V_{ds0}$ : il se comporte en amplificateur à contre-réaction et $|\overrightarrow{\Gamma}| > 1$.
- si MOD = -V, la diode 38 est passante et fait chuter la tension de polarisation $V_{gs}$ à $V_{gs0}$. Le transistor 11 est polarisé en mode détecteur, il ne présente pas de gain, $|\overrightarrow{\Gamma}| = 0$, et son impédance d'entrée est adaptée.

L'avantage de ce circuit est que le transistor n'a que deux états par rapport à l'adaptation de l'antenne : détecteur ou amplificateur.

Les deux exemples précédents montrent des circuits prévus pour la modulation d'amplitude, ou OOK. La figure 6 montre un circuit étudié pour la modulation de phase, en émission.

Par comparaison avec la figure 5, on voit que la partie droite de la figure, c'est à dire les circuits de source et de drain du transistor 11, est inchangée, et que les deux transistors de commutation 27 et 28 sont commandés par la même entrée E/R émission/réception.

Le circuit d'entrée, entre l'antenne 9 et la grille du transistor 11, comprend les mêmes composants que ceux de la figure 4 : une microbande 43 d'adaptation d'impédance au circuit intégré, une self 13 d'adaptation d'antenne et une résistance de grille 14. Mais, entre les deux éléments 13 et 43 d'adaptation d'impédance, est intercalée une cellule 39 de déphasage, par commutation de longueur de ligne. Un troisième transistor commutateur 40 est réuni par ses drain et source aux éléments 13 et 43 : si le transistor est conducteur, il équivaut à un court-circuit, et à une première longueur de la ligne de la grille du transistor 11. Si le transistor 40 est bloqué, la cellule de déphasage constituée par les deux selfs 41 et 42 et la capacité 44 modifie la longueur de ligne de la grille du transistor 11.

Le réseau RC résistance 45 et capacité 46, branché sur la grille du troisième transistor commutateur 40, fait partie de la cellule 39 de déphasage. Les signaux de modulation MOD, émis par le circuit 4 de traitement de l'information, sont appliqués entre la résistance 45 et la capacité 46.

De même que pour les premier et deuxième transistors commutateurs 27 et 28, la grille du troisième transistor commutateur 40 est réunie par une résistance 47 à l'alimentation -V : si aucun signal n'est appliqué sur la grille, le transistor 40 est automatiquement bloqué.

Le modem de la figure 6 fonctionne de la façon suivante.

A l'état de veille, les entrées MOD ET E/R sont à -V ou sous haute impédance, et les trois transistors commutateurs 27,28 et 40 sont bloqués. Le transistor 11, polarisé à $V_{gs0}$ et $V_{ds0}$, est en mode détecteur : il est prêt à démoduler une onde hyperfréquence modulée émise par la balise 2.

Lorsque le modem est réveillé par la balise, l'entrée E/R est à +V : les transistors 27 et 28 passants, commutent les résistances 23 et 19 et le transistor 11, polarisé sous $V_{gs1}$ et $V_{ds0}$, fonctionne en amplificateur. Mais selon que l'entrée MOD est à +V ou à -V, le transistor 40 est passant (+V) ou bloqué (-V) et change la longueur de ligne de la grille du transistor amplificateur 11. L'une des deux longueurs de ligne correspond à un premier état de phase de l'antenne 9, et l'autre longueur correspond à un deuxième état de phase de l'antenne, avec réflexion de l'énergie incidence Pbi par l'amplificateur à réflexion, par modulation de phase.

Les trois schémas d'applications qui ont été montrés correspondent à des réalisations en circuits intégrés. Il est évident pour l'homme de l'art, sans sortir du domaine de l'invention, que ces schémas peuvent être aussi réalisés en circuits hybrides. Dans ce cas, il est avantageux de remplacer les impédances intégrables par des impédances en lignes microbandes.

**Revendications**

1. Badge hyperfréquence, pour un système d'échange de données par ondes électromagnétiques entre, d'une part, l'antenne (10) d'une station fixe (2) dite balise, et d'autre part l'antenne (9) d'au moins une station mobile (1) dite badge, l'échange de données se faisant au moyen d'une onde porteuse émise par la balise et réfléchie après modulation par le badge, lequel comprend un modulateur-démodulateur (3) et est caractérisé en ce que le modulateur-démodulateur comporte un amplificateur à réflexion (11 + 12) avec contre-réaction (17) constitué par un transistor à effet de champ (11) dont la grille est réunie à l'antenne (9) du badge au moyen d'un circuit (12) d'adaptation d'impédance, amplificateur dans lequel :
   - pour une première valeur de polarisation grille-source $V_{gs0}$, proche de la tension de pincement $V_p$ dudit transistor (11) et pour laquelle le courant de drain $I_{ds}$ est faible, le circuit (12) d'adaptation de l'antenne (9) est accordé, à la fréquence de la porteuse, et le modulateur-démodulateur fonctionne en démodulateur/détecteur, ce qui correspond à la phase de réception par le badge,
   - pour une deuxième valeur de polarisation grille-source $V_{gs1}$, pour laquelle le courant de drain $I_{ds}$ est plus élevé, le circuit (12) d'adaptation de l'antenne (9) est désaccordé, et le modulateur-démodulateur fonctionne en modulateur/amplificateur à réflexion, ce qui correspond à la phase d'émission par le badge.

2. Badge selon la revendication 1, caractérisé en ce que, pour la première valeur de polarisation $V_{gs0}$, le circuit (17) de contre-réaction grille-source n'intervient pas.

3. Badge selon la revendication 1, caractérisé en ce que pour la deuxième valeur de polarisation $V_{gs1}$ le circuit (17) de contre-réaction entre grille et source intervient et génère une résistance négative, qui désaccorde le circuit (12) d'impédance de grille.

4. Badge selon la revendication 1, caractérisé en ce que le transistor (11) comporte :
   - sur son drain, une charge (16) à haute impédance (23), commutable avec une faible impédance (24) au moyen d'un premier transistor de commutation (27),
   - sur sa source, un circuit d'autopolarisation (19+20) à haute impédance (19), commutable avec une faible impédance (26) au moyen d'un deuxième transistor de commutation (28),

les grilles des premier (27) et deuxième (28) transistors de commutation étant réunies par des résistances (29+31, 30+32) à une source de tension négative.

5. Badge selon la revendication 4, comportant en outre un circuit (4) de traitement de l'information relié au moins au drain du transistor (11), caractérisé en ce qu'en l'absence de tout signal supplémentaire provenant dudit circuit sur les grilles des premiers (27) et deuxième (28) transistors de commutation, le badge fonctionne en détecteur/démodulateur.

6. Badge selon la revendication 5, caractérisé en ce que lorsque le circuit (4) de traitement de l'information adresse un signal supplémentaire de modulation (MOD) sur la grille du premier (27) transistor de commutation, et un signal supplémentaire d'émission/réception (E/R) sur la grille du deuxième (28) transistor de commutation, le badge fonctionne en amplificateur à réflexion par modulation d'amplitude par la tension de drain du transistor amplificateur (11).

7. Badge selon la revendication 5, caractérisé en ce que lorsque le circuit (4) de traitement de l'information adresse un signal de modulation (MOD) sur la grille du transistor amplificateur (11) et un signal supplémentaire d'émission/réception (E/R) sur les grilles des premier (27) et deuxième (28) transistors de commutation, le badge fonctionne en amplificateur à réflexion par modulation d'amplitude par la tension de grille du transistor amplificateur (11).

8. Badge selon la revendication 5, caractérisé en ce qu'il comporte en outre, dans le circuit (12) d'impédance de grille du transistor amplificateur (11), un circuit (39) déphaseur, qui peut être commuté au moyen d'un troisième (40) transistor de commutation, dont la grille est réunie par une résistance (47) à une source de tension négative.

9. Badge selon la revendication 8, caractérisé en ce que lorsque le circuit (4) de traitement de l'information adresse un signal supplémentaire d'émission/réception (E/R) sur les grilles des premier (27) et deuxième (28) transistors de commutation, et un signal supplémentaire de modulation (MOD) sur la grille du troisième (40) transistor de commutation, le badge fonctionne en amplificateur à réflexion et en modulation de phase, par la grille du transistor amplificateur (11).

**Patentansprüche**

1. Mikrowellenmarke für ein System zum Datenaustausch über elektromagnetische Wellen zwischen einerseits der Antenne (10) einer Feststation (2) und andererseits der Antenne (9) mindestens einer beweglichen Station (1), auch Marke genannt, wobei der Datenaustausch mit Hilfe einer von der Feststation ausgesendeten und nach Modulation durch die Marke reflektierten Trägerwelle erfolgt und wobei die Marke einen Modulator-Demodulator (3) enthält, dadurch gekennzeichnet, daß der Modulator-Demodulator einen Reflexionsverstärker (11, 12) mit Rückkopplung (17) enthält, bestehend aus einem Feldeffekttransistor (11), dessen Gate mit der Antenne (9) der Marke über eine Impedanzanpassungsschaltung (12) verbunden ist, wobei in dem Verstärker
   - für einen ersten Wert der Vorspannung zwischen Gate und Source $V_{gs0}$ in der Nähe der Cut-Off-Spannung $V_p$ des Transistors (11), bei der der Drainstrom $I_{ds}$ schwach ist, die Anpassungsschaltung (12) an die Antenne bei der Trägerfrequenz angepaßt ist und der Modulator-Demodulator als Demodulator-Detektor arbeitet, was dem Empfangsbetrieb der Marke entspricht,
   - für einen zweiten Wert der Vorspannung zwischen Gate und Source $V_{gs1}$, für die der Drainstrom $I_{ds}$ höher ist, die Anpassungsschaltung (12) an die Antenne (9) verstimmt ist und der Modulator-Demodulator als Modulator/Reflexionsverstärker arbeitet, was dem Sendebetrieb der Marke entspricht.

2. Marke nach Anspruch 1, dadurch gekennzeichnet, daß für den ersten Vorspannungswert $V_{gs0}$ die Rückkopplungsschaltung (17) von der Gatezur Source-Elektrode nicht wirksam wird.

3. Marke nach Anspruch 1, dadurch gekennzeichnet, daß für den zweiten Vorspannungswert $V_{gs1}$ die Rückkopplungsschaltung (17) zwischen Gate und Source wirksam wird und einen negativen Widerstand erzeugt, der die Impedanzanpassungsschaltung (12) der Gate-Elektrode verstimmt.

4. Marke nach Anspruch 1, dadurch gekennzeichnet, daß der Transistor (11) aufweist:
   - an seiner Drain-Elektrode einen Lastwiderstand (16) großer Impedanz (23), der mit Hilfe eines ersten Schalttransistors (27) auf eine niedrige Impedanz (24 umgeschaltet werden kann,
   - an seiner Source-Elektrode eine Selbstvorspannungsschaltung (19, 20) hoher Impedanz (19), die mit Hilfe eines zweiten Schalttransistors (28) auf eine niedrige Impedanz (26) umgeschaltet werden kann,
   wobei die Gate-Elektroden des ersten Schalttransistors (27) und des zweiten Schalttransistors (28) über Widerstände (29, 31; 30, 32) mit einer negativen Spannungsquelle verbunden sind.

5. Marke nach Anspruch 4, die außerdem eine Informationsverarbeitungsschaltung (4) aufweist, die mindestens mit der Drainelektrode des Transistors (11) verbunden ist, dadurch gekennzeichnet, daß die Marke als Detektor/Demodulator betrieben wird, solange kein zusätzliches Signal von der Verarbeitungsschaltung an die Gate-Elektroden der beiden Schalttransistoren (27, 28) gelangt.

6. Marke nach Anspruch 5, dadurch gekennzeichnet, daß die Marke als Reflexionsverstärker durch Amplitudenmodulation über die Drainspannung des Verstärkertransistors (11) betrieben wird, wenn die Informationsverarbeitungsschaltung (4) ein zusätzliches Modulationssignal (MOD) an die Gate-Elektrode des ersten Schalttransistors (27) und ein zusätzliches Sende/Empfangssignal (E/R) an das Gate des zweiten Schalttransistors (28) liefert.

7. Marke nach Anspruch 5, dadurch gekennzeichnet, daß sie als Reflexionsverstärker durch Amplitudenmodulation über die Gatespannung des Verstärkertransistors (11) arbeitet, wenn die Informationsverarbeitungsschaltung (4) ein Modulationssignal (MOD) an das Gate des Verstärkertransistors (11) und ein zusätzliches Sende/Empfangssignal (E/R) an die Gates des ersten und zweiten Schalttransistors (27, 28) sendet.

8. Marke nach Anspruch 5, dadurch gekennzeichnet, daß sie außerdem in der Impedanzanpassungsschaltung (12) der Gate-Elektrode des Verstärkertransistors (11) eine Phasenschieberschaltung (39) enthält, die mit Hilfe eines dritten Schalttransistors (40) umgeschaltet werden kann, dessen Gate-Elektrode über einen Widerstand (47) an einer negativen Spannungsquelle liegt.

9. Marke nach Anspruch 8, dadurch gekennzeichnet, daß sie als Reflexionsverstärker und mit Phasenmodulation über das Gate des Verstärkertransistors (11) arbeitet, wenn die Informationsverarbeitungsschaltung (4) ein zusätzliches Sende/Empfangssignal (E/R) an die Gate-Elektroden des ersten und des zweiten Schalttransistors (27, 28) sowie ein zusätzliches Modulationssignal (MOD) an das Gate des dritten Schalttransistors (40) liefert.

**Claims**

1. UHF badge, for a system for data exchange by electromagnetic waves between, on the one hand, the antenna (10) of a fixed station (2) called beacon, and, on the other hand, the antenna (9) of at least one mobile station (1) called badge, the data exchange being done by means of a carrier wave emitted by the beacon and reflected after modulation by the badge, which comprises a modulator-demodulator (3) and is characterized in that the modulator-demodulator includes a reflection amplifier (11 + 12) with feedback (17) consisting of a field-effect transistor (11) the gate of which is connected to the antenna (9) of the badge by means of an impedance matching circuit (12), in which amplifier:
   - for a first value of gate-source bias $V_{gs0}$, close to the pinch-off voltage $V_P$ of the said transistor (11) and for which the drain current $I_{ds}$ is small, the matching circuit (12) of the antenna (9) is tuned to the frequency of the carrier, and the modulator-demodulator operates as a demodulator/detector, which corresponds to the phase of reception by the badge,
   - for a second value of gate-source bias $V_{gs1}$, for which the drain current $I_{ds}$ is higher, the matching circuit (12) of the antenna (9) is detuned, and the modulator-demodulator operates as a modulator/reflection amplifier, which corresponds to the phase of transmission by the badge.

2. Badge according to Claim 1, characterized in that, for the first bias value $V_{gs0}$, the gate-source feedback circuit (17) does not intervene.

3. Badge according to Claim 1, characterized in that, for the second bias value $V_{gs1}$, the feedback circuit (17) between gate and source intervenes and generates a negative resistance, which detunes the gate impedance circuit (12).

4. Badge according to Claim 1, characterized in that the transistor (11) includes:
   - on its drain, a load (16) having high impedance (23), switchable with a low impedance (24) by means of a first switching transistor (27),
   - on its source, a self-biasing circuit (19 + 20) with high impedance (19), switchable with a low impedance (26) by means of a second switching transistor (28), the gates of the first (27) and second (28) switching transistors being connected by resistors (29 + 31, 30 + 32) to a negative voltage source.

5. Badge according to Claim 4, further including an information processing circuit (4), linked at least to the drain of the transistor (11), characterized in that in the absence of any additional signal originating from the said circuit on the gates of the first (27) and second (28) switching transistors, the badge operates as a detector/demodulator.

6. Badge according to Claim 5, characterized in that when the information processing circuit (4) sends an additional modulation signal (MOD) to the gate of the first switching transistor (27), and an additional transmission/reception signal (E/R) on the gate of the second switching transistor (28), the badge operates as a reflection amplifier by amplitude modulation by the drain voltage of the amplifier transistor (11).

7. Badge according to Claim 5, characterized in that when the information processing circuit (4) sends a modulation signal (MOD) to the gate of the amplifier transistor (11) and an additional transmission/reception signal (E/R) to the gates of the first (27) and second (28) switching transistors, the badge operates as a reflection amplifier by amplitude modulation by the gate voltage of the amplifier transistor (11).

8. Badge according to Claim 5, characterized in that it further includes, in the gate impedance circuit (12) of the amplifier transistor (11), a phase-shift circuit (39), which can be switched by means of a third switching transistor (40), the gate of which is connected via a resistor (47) to a negative voltage source.

9. Badge according to Claim 8, characterized in that, when the information processing circuit (4) sends an additional transmission/reception signal (E/R) to the gates of the first (27) and second (28) switching transistors, and an additional modulation signal (MOD) to the gate of the third switching transistor (40), the badge operates as a reflection amplifier and in phase modulation, by the gate of the amplifier transistor (11).

# FIG.1

# FIG.4

# FIG.2

# FIG.5

FIG.3

FIG.6